# EUROPEAN PATENT APPLICATION

(11) **EP 4 614 685 A1**
(43) Date of publication of application: **10.09.2025**
(21) Application number: 24220236.4
(22) Date of filing: 16.12.2024
(51) Int. Cl.: H01M 50/103, H01M 50/166, H01M 50/169

(54) **BATTERY CELL INCLUDING SUPPORT PORTION**

(30) Priority: 04.03.2024 KR 20240030521
(71) Applicant: SK On Co., Ltd., Seoul 03161 (KR)
(72) Inventor: LEE, Dong Hyee, 34124 Daejeon (KR); PAIK, Hyung Ju, 34124 Daejeon (KR); KIM, Do Won, 34124 Daejeon (KR)
(74) Representative: Prüfer & Partner mbB Patentanwälte · Rechtsanwälte

(57) **Abstract**

A battery cell includes a case accommodating an electrode assembly in an internal accommodation space and having an opening formed therein, a cap plate at least partially inserted into the accommodation space through the opening and coupled to the case, and a support portion disposed in the accommodation space and supporting a lower surface of the cap plate, wherein a side surface of the cap plate facing the internal surface of the case is spaced apart from the internal surface of the case by a predetermined distance to form a fixing space, and the support portion is disposed below the cap plate so that at least a portion thereof forms a lower surface of the fixing space.

## Description

### TECHNICAL FIELD

The disclosure and implementations disclosed in this patent document generally relate to a battery cell including a support portion.

### BACKGROUND

Secondary batteries, unlike primary batteries, have come to prominence as a power source for various mobile devices and electric vehicles due to convenience, in that they are chargeable and dischargeable.

Secondary batteries may include battery cells in which an electrode assembly formed by stacking a positive electrode plate, a negative electrode plate, and a separator or winding them in a roll shape is accommodated inside a case together with an electrolyte. A plurality of battery cells may be stacked in a certain direction and accommodated in a battery module or battery pack.

In some types of secondary batteries, the electrode assembly may be injected into the case of the battery cell together with an electrolyte. In a state in which the electrode assembly and the electrolyte are accommodated, a cap may be coupled to an opening in the case to seal internal space of the case.

Here, the height of the battery cell may be increased due to the thickness of the cap itself or the thickness of a welding bead itself fixing the cap to the case.

The description is provided to help understand the technical background of the present disclosure and should not be construed to reduce, limit, or restrict the technical idea of the present disclosure. In addition, the contents described or suggested in the description do not necessarily mean prior art, and some may include contents that do not correspond to prior art.

### SUMMARY

The present disclosure may be implemented in some embodiments to provide a battery cell having a volume reduced by a thickness of a cap plate.

According to one aspect of the present disclosure, a battery cell in which a welding bead does not protrude outwardly of a case may be provided.

In some embodiments of the present disclosure, a battery cell includes: a case accommodating an electrode assembly in an internal accommodation space and having an opening formed therein; a cap plate at least partially inserted into the accommodation space through the opening and coupled to the case; and a support portion disposed in the accommodation space and supporting a lower surface of the cap plate, wherein a side surface of the cap plate facing the internal surface of the case is spaced apart from the internal surface of the case by a predetermined distance to form a fixing space, and the support portion is disposed below the cap plate so that at least a portion thereof forms a lower surface of the fixing space.

The battery cell may further include a welded portion at least partially disposed in the fixing space to fix the case to the cap plate, wherein the support portion supports the welded portion and the cap plate together.

The support portion may be coupled to the internal surface of the case, and at least the support portion may be provided on the internal surface of the case to support an edge of the cap plate.

The internal surface of the case may be provided as four or more surfaces, and the support portion may be provided on two or four surfaces facing each other among the internal surfaces of the case to support the cap plate.

The support portion may extend along the internal surface of the case and surround the opening of the case.

A chamfer inclined with a length increasing toward the accommodation space may be formed on the side surface of the cap plate.

The side surface of the cap plate may be provided with a step portion.

The side surface of the cap plate may include a first side surface spaced apart from the internal surface of the case; a second side surface disposed above the first side surface and having a smaller length than the first side surface; and a step portion surface connecting the first side surface to the second side surface, wherein at least one of the first side surface or the second side surface of the cap plate is formed with a chamfer inclined with a length increasing toward the accommodation space.

An upper portion of the welded portion may be disposed on the same level as or lower than an upper surface of the case.

An upper surface of the case may be disposed on the same level as or higher than an upper surface of the cap plate, and an upper portion of the welded portion may be disposed on the same level as or higher than the upper surface of the cap plate.

The upper portion of the welded portion may be disposed between the upper surface of the case and the upper surface of the cap plate.

The fixing space may be formed by the internal surface of the case, the side surface of the cap plate, and an upper surface of the support portion.

A distance between an upper surface of the support portion and an upper surface of the case may be equal to or greater than a height of the welded portion.

A length of the cap plate may be formed to be smaller than a length of the internal surface of the case.

In some embodiments of the present disclosure, a battery cell includes: a case accommodating an electrode assembly in an internal accommodation space; a cap plate at least partially inserted into the accommodation space and coupled to the case; a support portion disposed in the accommodation space to support a lower surface of the cap plate; and a welded portion disposed between and fixing an internal surface of the case and a side surface of the cap plate facing the internal surface of the case to each other, wherein the support portion is provided so that at least a portion thereof is in contact with a lower surface of the welded portion.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to an embodiment of the present disclosure;
FIGS. 2A to 2C are exploded views of a case and a cap plate of a battery cell;
FIG. 3 is a schematic internal cross-sectional view along line I-I' of FIG. 1;
FIG. 4 is an enlarged view of A of FIG. 2A to 2C;
FIG. 5 is a drawing illustrating an embodiment of the present disclosure;
FIG. 6 is a drawing illustrating another embodiment of the present disclosure;
FIG. 7 is a drawing illustrating another embodiment of the present disclosure; and
FIGS. 8A to 8C illustrate an embodiment in which a step portion structure is applied to a side surface of a cap plate.

### DETAILED DESCRIPTION

Prior to the description of the present disclosure, terms and words used in the present specification and claims to be described below should not be construed as limited to ordinary or dictionary terms, and should be construed in accordance with the technical idea of the present disclosure based on the principle that the inventors may properly define their own inventions in terms of terms in order to best explain the invention.

Also, the same reference numerals or symbols respectively illustrated in the attached drawings denote parts or elements that perform the actually same functions. For convenience of description and understanding, the parts or elements will be described by using the same reference numerals or symbols even in different embodiments.

As used herein, the singular forms are intended to include the plural forms as well, unless the context clearly indicates otherwise. It will be further understood that the terms "comprises," "comprising," etc. when used in this specification, specify the presence of stated features, integers, steps, operations, elements, and/or components, but do not preclude the presence or addition of one or more other features, integers, steps, operations, elements, components, and/or groups thereof.

In addition, in the present specification, the expressions, such as an upper side, a lower side, a side face, a rear surface, and the like, are described based on the drawings and may be expressed differently when the direction of the corresponding object is changed.

The terms including ordinal numbers, such as `first,' 'second,' etc. may be used herein to distinguish elements from one another. These ordinal numbers are merely used to distinguish the same or similar elements from one another, and meanings of the terms are not construed as being limited by the using of the ordinal numbers. For example, use orders or arrangement orders of elements combined with these ordinal numbers are not limited by numbers thereof. The ordinal numbers may be redisposed with one another.

Hereinafter, the present disclosure will be described with reference to the drawings.

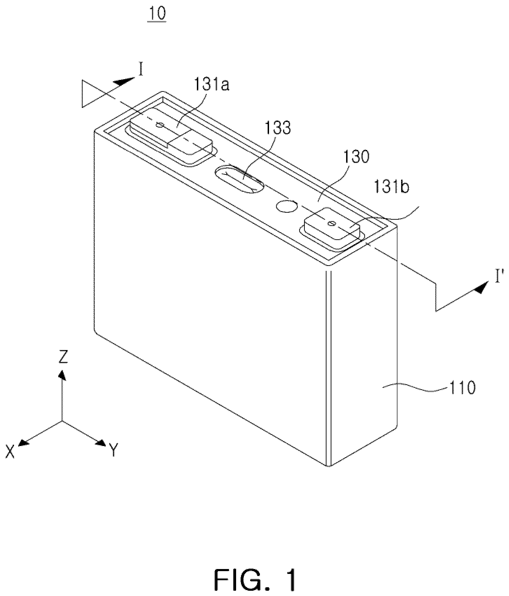

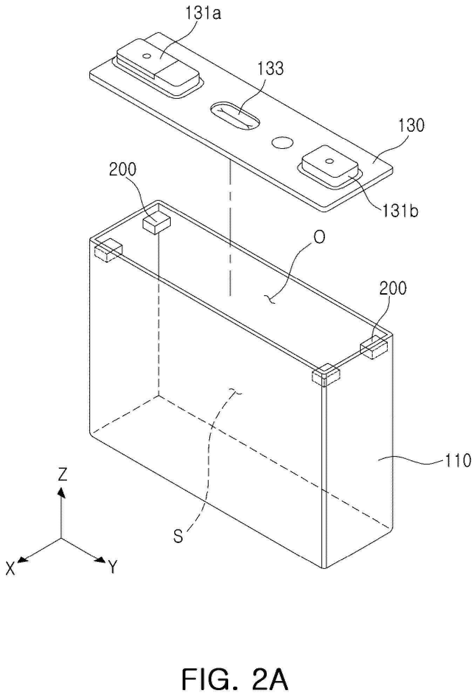

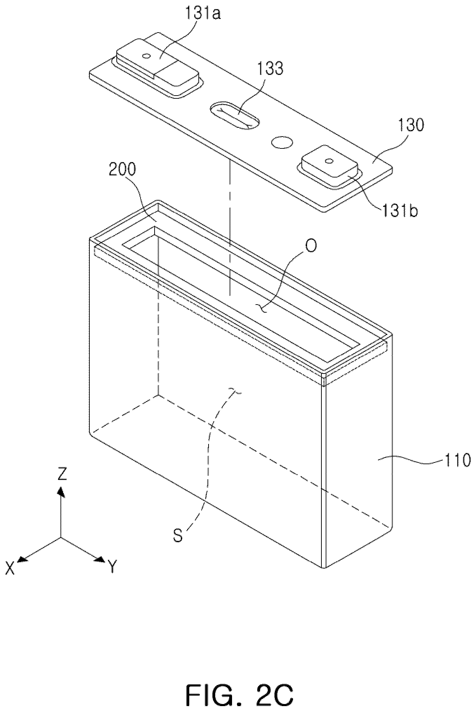

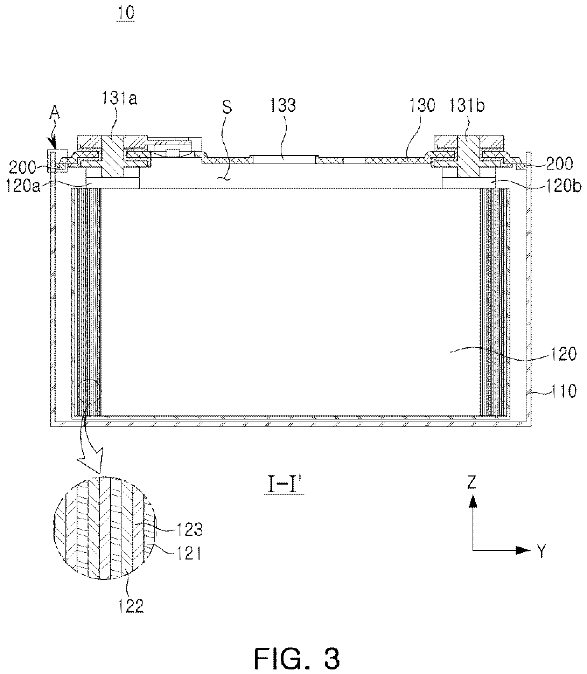

FIG. 1 is a perspective view of a battery cell according to an embodiment of the present disclosure, FIG. 2A to 2C is an exploded view of a case and a cap plate of the battery cell, and FIG. 3 is a schematic internal cross-sectional view taken along line I-I' of FIG. 1.

Referring to FIGS. 1 to 3 together, a battery cell 10 according to an embodiment of the present disclosure includes a case 110 accommodating an electrode assembly 120 in an internal accommodation space S and having an opening O, a cap plate 130 at least partially inserted into the accommodation space S through the opening O and coupled to the case 110, and a support portion 200 disposed in the accommodation space S and supporting a lower surface 130b of the cap plate 130, wherein a side surface 130a of the cap plate 130 facing an internal surface 110a of the case 110 is spaced apart from the internal surface 110a of the case 110 by a predetermined distance a to form a fixing space V, and the support portion 200 is disposed below the cap plate 130 so that at least a portion thereof forms a lower surface of the fixing space V.

In other words, the battery cell 10 of the present disclosure may include the case 110 having the opening O formed on at least one side to accommodate the electrode assembly 120 in the accommodation space S therein and the cap plate 130 accommodated at least partially in the accommodation space of the case 110 through the opening O of the case 110 and coupled to the case 110 to close the opening O. In addition, the present disclosure may include the support portion 200 disposed in the accommodation space S of the case 110 and supporting the cap plate 130 in the accommodation space S.

Meanwhile, the fixing space V may refer to a space formed by the internal surface 110a of the case 110, the side surface 130a of the cap plate 130, and an upper surface 200a of the support portion 200.

The case 110 may provide the internal space in which the electrode assembly 120 described below may be accommodated. In the drawing, the case 110 is expressed as having a roughly rectangular solid shape, but this is only an example may be changed to have various shapes as long as the accommodation space S accommodating the electrode assembly 120 is formed.

In addition, the cap plate 130 to be described below may be coupled to the opening O of the case 110 to seal the accommodation space S. A detailed structure in which the cap plate 130 is coupled to the opening O while being supported by the support portion 200 will be described below.

A material of the case 110 may be appropriately selected in consideration of thermal and electrical conductivity, rigidity corresponding to swelling of the electrode assembly 120, processability, manufacturing costs, etc. For example, the case 110 may be formed of a metallic material including aluminum, aluminum alloy, etc.

The electrode assembly 120 may be disposed in the accommodation space S of the case 110.

The electrode assembly 120 may include a positive electrode material (i.e., a cathode material) 121. The positive electrode material 121 may include a positive electrode current collector and a positive electrode active material. In some embodiments, the positive electrode current collector may include aluminum, an aluminum alloy, etc., and the positive electrode active material may include lithium cobalt oxide, lithium manganese oxide, lithium nickel oxide, lithium iron phosphate, etc. The positive electrode active material may be coated on a surface of the positive electrode current collector. A partial region of the positive electrode current collector in which the positive electrode active material is not coated may function as a cathode tab 120a. In some embodiments, a plurality of positive electrode tabs 120a may be provided, and some or all of the plurality of positive electrode tabs 120a may be mutually bonded.

The electrode assembly 120 may include a negative electrode material (i.e., an anode material) 122. The negative electrode material 122 may include a negative electrode current collector and a negative electrode active material. In some embodiments, the negative electrode current collector may include copper, a copper alloy, nickel, a nickel alloy, etc., and the negative electrode active material may include carbon, silicon, etc. The negative electrode active material may be coated on a surface of the negative electrode current collector. A partial region of the negative electrode current collector in which the negative electrode active material is not coated may function as a negative electrode tab 120b. In some embodiments, a plurality of negative electrode tabs 120b may be provided, and some or all of the plurality of negative electrode tabs 120b may be mutually bonded.

The electrode assembly 120 may include a separator 123. The separator 123 may be disposed between the positive electrode material 121 and the negative electrode material 122. The separator 123 may function to physically prevent the positive electrode material 121 and the negative electrode material 122 from contacting each other, while providing a passage for the migration of ions. For example, the separator 123 may include a porous polymer film or a porous non-woven fabric. In some embodiments, the separator 123 may be formed of a polymer material including polyethylene, polypropylene, etc. In addition, the separator 123 may include a dry and wet separator. In some embodiments, the separator 123 may include a coating layer including a ceramic coating layer, etc.

In the electrode assembly 120, the above components may be arranged in a manner, such as winding or stacking. For example, the electrode assembly 120 may be formed as a structure in which the positive electrode material 121, the negative electrode material 122, and the separator 123 are wound around a longitudinal or transverse axis. Alternatively, the electrode assembly 120 may be formed as a structure in which the aforementioned winding structure is compressed in a direction, approximately perpendicular to the winding axis. The aforementioned winding structure may be referred to as a `jelly roll' in the art.

As another example, the electrode assembly 120 may be formed as a structure in which the positive electrode material 121, the negative electrode material 122, and the separator 123 are sequentially stacked vertically (e.g., in a thickness direction or height direction of the electrode assembly). In some cases, the separator 123 in the stack structure may be formed as a structure in which a plurality of unit separators 123 continuous in a length direction are sequentially folded according to stacking of the positive electrode material 121 and the negative electrode material 122. The aforementioned stacked structure may be referred to as 'stack and folding,' `Z-folding,' etc. in the art. However, in the present embodiment, the arrangement of each component of the electrode assembly 120 is not particularly limited. The electrode assembly 120 may have various arrangements other than those described above.

In some embodiments, the electrode assembly 120 may be formed by combining a plurality of block units. For example, the electrode assembly 120 may include a block unit wound in a jelly roll manner, and two or more of the block units may be combined to form the electrode assembly 120. In the present embodiment, the electrode assembly 120 is formed by combining two jelly roll units. As another example, the electrode assembly 120 may include a block unit wound in a stack-and-fold manner, and two or more of the block units may be combined to form the electrode assembly 120.

The electrode assembly 120 may be accommodated in the accommodation space S of the case 110 together with the electrolyte. In some embodiments, the electrolyte may be formed of an organic solvent including a lithium salt. For example, the lithium salt may include lithium hexafluorophosphate (LiPF6), lithium tetrafluoroborate (LiBF4), etc. in a liquid or gel state, and the organic solvent may include a cyclic carbonate, such as ethylene carbonate (EC), propylene carbonate (PC), etc. or a linear carbonate, such as diethyl carbonate (DEC), dimethyl carbonate (DMC), ethyl methyl carbonate (EMC), etc.

In some other embodiments, the electrolyte may be omitted or substituted. For example, when an inorganic solid electrolyte is used, the liquid or gel electrolyte may be omitted.

In addition, the structure of the electrode assembly 120 illustrated in the present disclosure is an example. In the present disclosure, the electrode assembly 120 including the positive electrode tab 120a and the negative electrode tab 120b arranged in parallel from one side of the electrode assembly 120 is illustrated, but the positions and/or numbers of the positive electrode tab 120a and the negative electrode tab 120b are examples. For example, in an embodiment not illustrated, the positive electrode tab 120a and the negative electrode tab 120b may be located with the electrode assembly 120 (e.g., the positive electrode material 121, the negative electrode material 122, and the separator 123) interposed therebetween. At least a portion of the positive electrode tab 120a and the negative electrode tab 120b may be located between the case 110 and the electrode assembly 120, respectively.

The cap plate 130 may be coupled to the case 110 to close the opening of the case 110. In the drawing, the cap plate 130 is illustrated as a quadrangular plate shape corresponding to the opening of the case 110. The cap plate 130 may be coupled to the case 110 to close the accommodation space S of the case 110 in which the electrode assembly 120 is disposed. In some embodiments, the cap plate 130 may be welded to the case 110 by ultrasonic welding, laser welding, or the like.

A length of the cap plate 130 may be formed to be smaller than a length of the internal surface 110a of the case 110. Through this, the cap plate 130 may be easily inserted into the opening O.

Terminal portions 131a and 131b electrically connected to the electrode assembly 120 may be arranged on the cap plate 130. The battery cell 10 may be electrically connected to an external power source through the terminal portions 131a and 131b. The terminal portions 131a and 131b may include a positive electrode terminal 131a and a negative electrode terminal 131b. The positive electrode terminal 131a may be electrically connected to the positive electrode tab 120a of the electrode assembly 120, and the negative electrode terminal 131b may be electrically connected to the negative electrode tab 120b of the electrode assembly 120.

The cap plate 130 may include a vent 133. In the present embodiment, the vent 133 is disposed between the positive electrode terminal 131a and the negative electrode terminal 131b. However, the position of the vent 133 may vary as needed and is not necessarily limited to the example. In some other embodiments, a vent 133 may be disposed on or added to the case 110. The vent 133 may be formed to be opened in response to internal pressure of the case 110. The vent 133 may function to discharge the internal pressure to the outside of the case 110 to contribute to stabilizing the internal elements of the case 110. In the present embodiment, the vent 133 may include a notch (not shown) having a predetermined shape. The notch may be a vulnerable portion formed to be at least partially sunken in the thickness direction of the vent 133. By inducing the vent 133 to be fractured according to the internal pressure of the accommodation space S through the notch, the vent 133 may be opened to discharge a fluid (gas, etc.) in the accommodation space S of the case 110 to the outside.

Meanwhile, in the present disclosure, the secondary battery including the case 110 including one opening O and the cap plate 130 located on one side of the case 110 is illustrated, but this is an example. In an embodiment not illustrated, the secondary battery including openings O formed on both sides of the case 110 and a plurality of cap plates 130 respectively located in the openings O may be provided. For example, the secondary battery may include a first cap plate located on one side of the case 110 and a second cap plate located on the other side of the case 110.

The support portion 200 of the present disclosure may be located to be close to the opening O in the accommodation space S. The support portion 200 may support a lower surface of the edge of the cap plate 130 at least partially inserted into the accommodation space S. That is, the support portion 200 is coupled to the internal surface 110a of the case 110, and at least one support portion 200 may be provided on the internal surface 110a of the case 110 to support the edge of the cap plate 130.

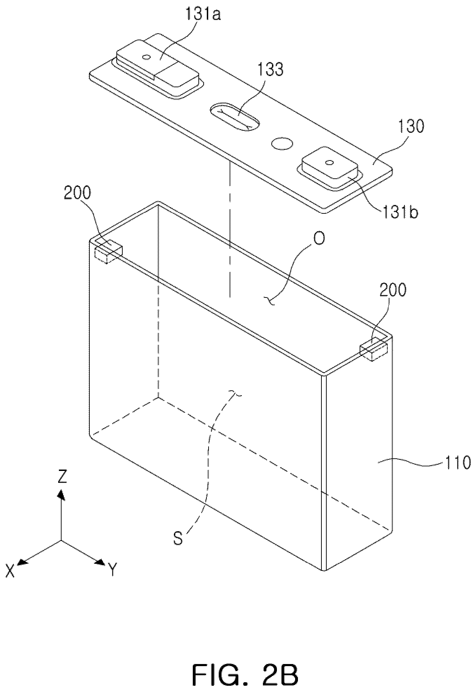

For example, as shown in FIGS. 2A and 2B, the support portions 200 may be arranged at two or four corners facing each other in the accommodation space S to support the corner portions of the edges of the cap plate 130. That is, the support portions 200 may be arranged at two or four corners facing each other on the internal surface of the case 110 to support the cap plate 200.

In addition, the support portions 200 may be provided to support the four corners of the cap plate 130. Alternatively, the support portions 200 may be arranged at two of the four corners to support the cap plate 130. In other words, the support portion 200 may be arranged at two or four edge surfaces of the internal surface 110a of the case 110 facing each other to support the cap plate 130.

In other words, referring to FIGS. 2A and 2B, in an embodiment of the present disclosure, the internal surface 110a of the case 110 is provided in four or more (illustrated as four in the drawing) and the support portions 200 may be provided in an even number and may be arranged on an even number of the internal surfaces of the case 110. Here, in order to support the cap plate 130, the support portions 200 may be arranged on the internal surfaces 110a facing each other.

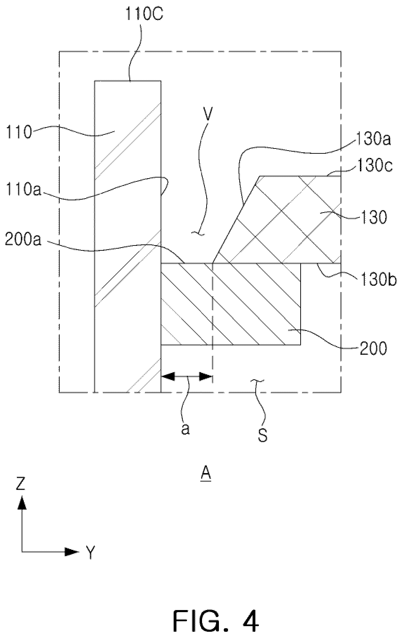

That is, according to an embodiment of the present disclosure, four or more internal surfaces 110a of the case 110 may be provided, and the support portion 200 may be provided on two or four of the internal surfaces 110a of the case 110 to face each other. FIG. 2A illustrates that the support portion 200 is provided on four surfaces, and FIG. 2B illustrates that the support portion 200 is provided on two surfaces. In addition, as illustrated in FIG. 2A to 2C, the support portion 200 may be formed to surround the internal surface (110a, see FIG. 4) of the case 110 to fully support the edge of the cap plate 130. In other words, the support portion 200 may be formed to extend along the internal surface 110a of the case 110 to surround the opening O of the case 110. Through this, the support portion 200 may support the entire edge of the cap plate 130.

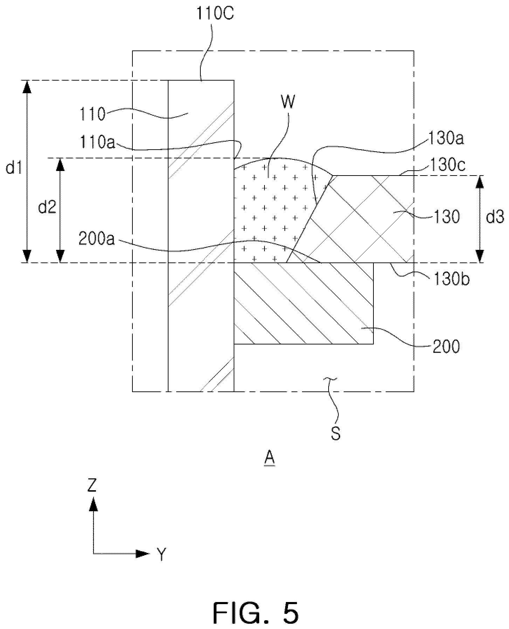

In this manner, the support portion 200 of the present disclosure is not limited thereto and may have any structure capable of supporting a welded portion W (see FIG. 5) to be described below and the cap plate 130 together.

Hereinafter, the coupling structure of the case 110 and the cap plate 130 through the support portion 200 of the present disclosure will be described in detail.

FIG. 4 is an enlarged view of A of FIG. 2A to 2C, and FIG. 5 is a drawing illustrating an embodiment of the present disclosure. FIG. 4 and FIG. 5 are enlarged views of the coupling structure of the cap plate 130 and the case 110.

Referring to FIGS. 4 and 5 together, the battery cell 10 according to an embodiment of the present disclosure may include the support portion 200 disposed in the accommodation space S to support the cap plate 130 at least partially inserted into the accommodation space S.

More specifically, according to an embodiment, the cap plate 130 may be at least partially accommodated in the accommodation space S through the opening O of the case 110. Here, "at least partially accommodated" may mean that at least a portion of the lower surface 130b of the cap plate 130 (for example, an edge portion of the cap plate 130) is disposed to be lower (in a -Z-axis direction) than the upper surface 110c of the case 110.

In an embodiment, the fixing space V may be formed between the internal surface 110a of the case 110 and the side surface 130a of the cap plate 130. The fixing space V, a space between the internal surface 110a of the case 110 and the side surface 130a of the cap plate 130, may be a portion in which the welded portion W to be described below is formed.

For example, the side surface 130a of the cap plate 130 facing the internal surface 110a forming the accommodation space S of the case 110 may be spaced apart from the internal surface 110a of the case 110 by the predetermined distance a to form the fixing space V. In addition, by separating the cap plate 130 and the case 110 in this manner, it is possible to prevent or minimize stress from being concentrated on the edge (the side surface; portion in which 130a is provided) of the cap plate 130. For example, a chamfer may be formed on the side surface 130a of the cap plate 130 so that the fixing space V widens upwards (in a +Z-axis direction). In other words, the cap plate 130 may have a chamfer formed to be inclined on the side surface 130a so that the length thereof increases toward the accommodation space S. That is, the side surface 130a of the cap plate 130 may be provided to be inclined to have the length increasing toward the accommodation space S.

The drawing illustrates a structure in which a chamfer is formed on the side surface 130a of the cap plate 130.

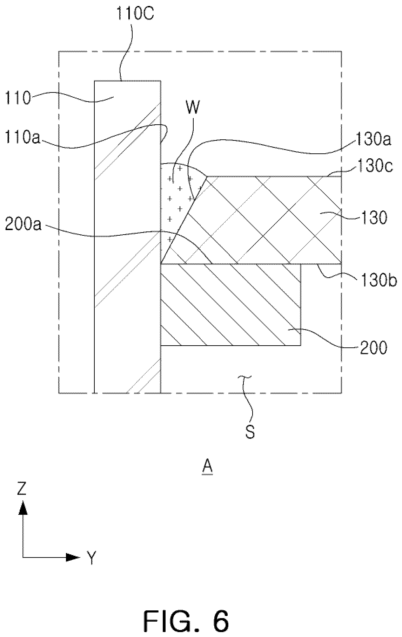

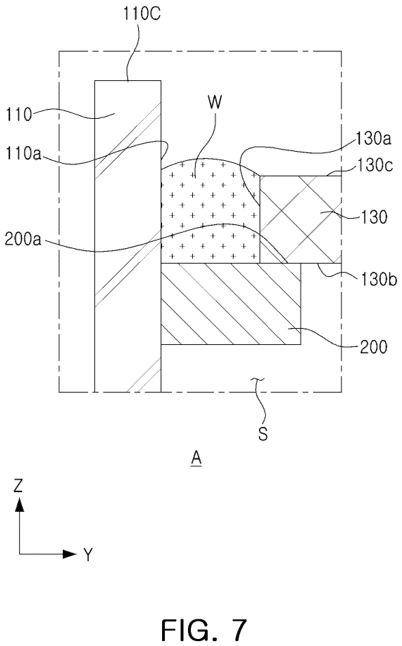

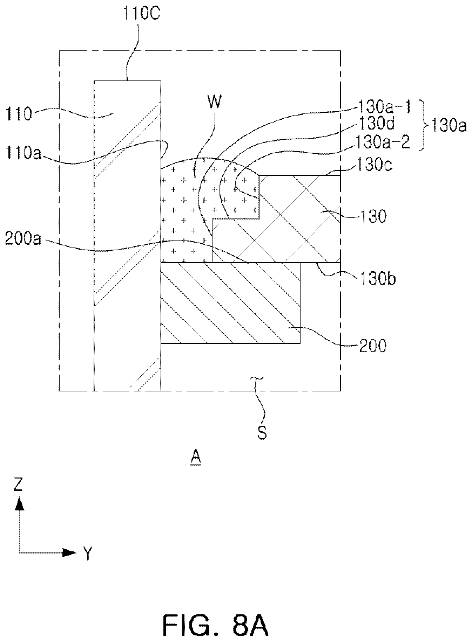

However, this is only an embodiment, and any structure allowing the fixing space V to be formed may be employed even without a chamfer. More specifically, the present disclosure may include at least one of a first structure (see FIG. 7) in which the side surface 130a of the cap plate 130 is spaced apart from the case 110 by the predetermined distance a so that the fixing space V is formed, a second structure in which a chamfer is formed on the side surface 130a of the cap plate 130, a third structure (see FIG. 8A to 8C) in which the side surface 130a of the cap plate 130 is formed stepwise, or a fourth structure in which both the first structure and the second structure are applied. FIGS. 4 and 5 are described based on the fourth structure in which both the first and second structures described above are applied. As will be described below, FIG. 6 is based on an embodiment in which only the second structure is applied, FIG. 7 is based on an embodiment in which the first structure is applied, and FIG. 8A to 8C is based on an embodiment in which the third structure is applied.

As such, the present disclosure is not particularly limited as long as the fixing space V is formed between the case 110 and the cap plate 130 and the support portion 200 described below supports the lower surface of the fixing space V.

The support portion 200 may be coupled to the internal surface 110a of the case 110 and may be arranged in the accommodation space S. The upper surface 200a of the support portion 200 may be disposed to be closer to the lower surface (the -Z-axis direction) than the upper surface 110c of the case 110. The support portion 200 may be disposed to be lower (the - Z-axis direction) than the cap plate 130 in the accommodation space S to support the cap plate 130.

In addition, the support portion 200 may form a lower surface of the fixing space V formed between the internal surface 110a of the case 110 and the side surface 130a of the cap plate 130.

Here, "forming the lower surface of the fixing space V" may be disposed to support a lower surface of the welded portion W formed in the fixing space V to be described below. That is, the support portion 200 may be provided to support not only the lower surface 130b of the cap plate 130 but also the lower surface of the welded portion W to be described below.

Referring to FIG. 5, the welded portion W may be formed in the fixing space V. The welded portion W may fix the internal surface 110a of the case 110 to the side surface of the cap plate 130a.

In other words, the battery cell 10 according to an embodiment of the present disclosure may further include the welded portion W at least partly disposed in the fixing space V to fix the case 110 to the cap plate 130. Here, the support portion 200 may be provided to support the welded portion W and the cap plate 130 together. Here, "supporting together" may mean that the upper surface 200a of the support portion 200 contacts the lower surface of the welded portion W and the lower surface 130b of the cap plate 130 to support them together. That is, the support portion 200 forming the lower surface of the fixing space V may supports the lower surface of the welded portion W. In addition, "forming the lower surface of the fixing space V" may mean that the support portion 200 is provided to support the lower surface of the welded portion W.

In other words, according to an embodiment of the present disclosure, the battery cell 10 may include the case 110 accommodating the electrode assembly 120 in the internal accommodation space S, the cap plate 130 at least partially inserted into the accommodation space S and coupled to the case 110, the support portion 200 disposed in the accommodation space S to support the lower surface 130b of the cap plate 130, and the welded portion W disposed between the internal surface 110a of the case 110 and the side surface 130a of the cap plate 130 facing the internal surface 110a of the case 110 to fix them to each other, wherein the support portion 200 may be provided such that at least a portion thereof is in contact with the lower surface of the welded portion W.

Meanwhile, in an embodiment, the welded portion W may be a welding bead provided to fix the internal surface 110a of the case 110 and the side surface 130a of the cap plate 130 to each other. For example, the welded portion W may be formed by melting at least one of the case 110 or the cap plate 130 by irradiating the vicinity of the fixing space V with a laser by a method, such as laser welding. The lower surface of the welded portion W may be supported by the support portion 200. That is, the welded portion W may fix the case 110, the cap plate 130, and the support portion 200 together. An upper portion (the most protruding portion in the +Z-axis direction) of the welded portion W may be located at the same height as the upper surface 110c of the case 110 or lower (in the -Z-axis direction) . In other words, referring to FIG. 5, a height d2 of the welded portion W may be equal to or less than a distance d1 between the support 200 and the case 110.

That is, the distance d1 between the upper surface 200a of the support 200 and the upper surface 110a of the case 110 may be equal to or greater than the height d2 of the welded portion W.

Here, the height of the welded portion W may refer to a vertical distance from the lower surface of the welded portion W to the top of the welded portion W or a vertical distance from the upper surface 200a of the support 200 to the top of the welded portion W.

More specifically, in an embodiment, the size of the welded portion W may increase depending on the temperature of heat based on laser irradiation. If at least a portion of the welded portion W is located above the upper surface 110c of the case 110 (if the welded portion W is located outside the case), the size of the battery cell 10 may increase. In addition, external impact may be concentrated on the protruding welded portion W, making it more vulnerable to the impact and reducing the durability of the battery cell 10. Accordingly, according to an embodiment of the present disclosure, the welded portion W may be disposed in the accommodation space S of the case 110.

That is, the upper surface 110c of the case 110 may be disposed on the same level as or higher than the upper surface 130c of the cap plate 130, and the upper portion of the welded portion W may be disposed on the same level as or lower (in the -Z-axis direction) than the upper surface 110c of the case 110. Specifically, the distance d1 between the upper surface 200a of the support 200 and the upper surface 110a of the case may be equal to or greater than a distance d3 between the upper surface 200a of the support portion and the upper surface 130c of the cap plate. In addition, the distance d3 between the upper surface 200a of the support portion and the upper surface 130c of the cap plate may be equal to or smallerthan the height d2 of the welded portion W.

The welded portion W may be disposed to completely fill the fixing space V for bonding force between the case 110 and the cap plate 130. In an embodiment, the upper portion of the welded portion W may be disposed as the same level as or higher (in the +Z-axis direction) than the upper surface 130c of the cap plate 130.

For example, the upper portion of the welded portion W may be disposed between the upper surface 110c of the case 110 and the cap plate 130c.

In this manner, in an embodiment, the upper portion of the welded portion W may be disposed on the same level as or lower (in the -Z-axis direction) than the upper surface 110c of the case 110, but may be disposed on the same level as or higher than the upper surface 130c of the cap plate 130.

Meanwhile, in an embodiment, the upper surface 130c of the cap plate 130 may be disposed on the same level as or lower (in the -Z-axis direction) than the upper surface 110c of the case 110. Through the aforementioned structure, the height of the battery cell 10 may be reduced according to the present disclosure.

Meanwhile, referring to FIG. 2A to 2C together, in an embodiment, the terminal portions 131a and 131b electrically connected to an external power source may be disposed on the cap plate 130, but an upper surface thereof may be disposed on the same level as or higher than the upper surface 110c of the case 110. In other words, in an embodiment, the upper surface 110c of the case 110 may be disposed between the upper surface of the terminal portions 131a and 131b and the upper surface of the cap plate 130c based on the height direction (the Z-axis direction).

However, the present disclosure is not limited thereto, and any structure in which at least a portion of the cap plate 130 is inserted into the accommodation space S so that the height of the battery cell 10 is reduced may be included in the present disclosure.

FIG. 6 is a drawing illustrating another embodiment of the present disclosure, in which the second structure (only a chamfer is formed on the side surface 130a of the cap plate) is illustrated.

According to another embodiment, a chamfer may be formed on the side surface 130c of the cap plate 130 to form a predetermined space (the `fixing space; V') together with the internal surface 110a of the case 110, and the welded portion W may be formed in the fixing space V.

In the present embodiment, a lower surface of the welded portion W may be supported by the side surface 130c of the cap plate 130, and the support portion 200 may be disposed to face the welded portion W in the height direction (the Z-axis direction) with the cap plate 130 interposed therebetween.

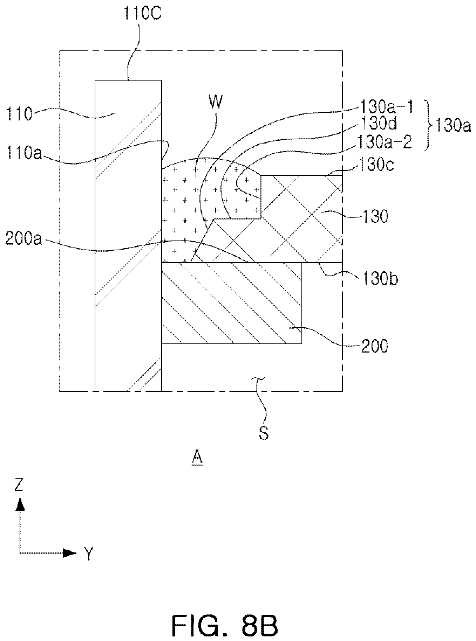

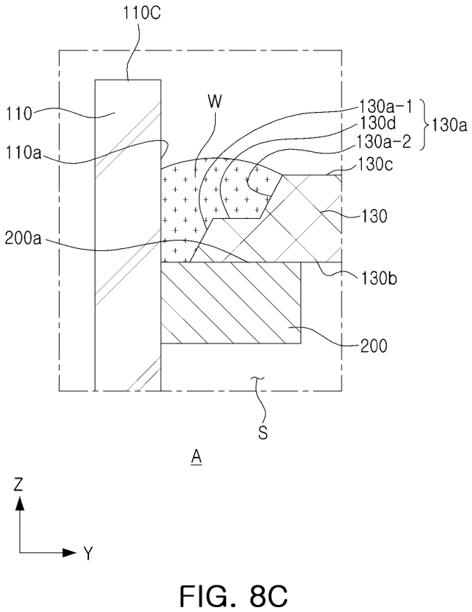

Meanwhile, another embodiment of the present disclosure will be described with reference to FIGS. 7 and 8.

FIG. 7 illustrates another embodiment of the present disclosure. Referring to FIG. 7, the side surface 130a of the cap plate 130 according to an embodiment of the present disclosure may be provided to face the internal surface 110a of the case 110 in parallel.

FIGS. 8A to 8C illustrate an embodiment in which a step portion structure is applied to the side surface of the cap plate. Referring to FIGS. 8A to 8C, the side surface 130a of the cap plate 130 may be provided with a step portion. Through the step portion structure, a contact area between the welded portion W and the cap plate 130 may be further increased.

In addition, the chamfer structure described above may of course be applied to the step portion structure as well.

More specifically, the side surface 130a of the cap plate 130 may include a first side surface 130a-1 spaced apart from the internal surface 110a of the case 110, a second side surface 130a-2 disposed above the first side surface 130a-1 and having a smaller length than the first side surface, and a step portion surface 130d connecting the first side surface 130a-1 to the second side surface 130a-2. Here, a chamfer may be formed on at least one of the first side surface 130a-1 or the second side surface 130a-2 of the cap plate, the chamfer being formed in an inclined shape with a length increasing toward the accommodation space S.

For example, FIG. 8B illustrates a structure in which a chamfer is formed on the first side surface 130a-1, and FIG. 8c illustrates a structure in which chamfers are formed on both the first side surface 130a-1 and the second side surface 130a-2, respectively.

In addition, although FIGS. 8A to 8C illustrate that the side surface 130a is formed as a two-stage step portion structure, the present disclosure is not limited thereto. In other words, any step portion structure in which the side surface 130a is applied, even if it being formed as a three-stage or more step portion structure, will all fall within the present disclosure. Although various embodiments of the present disclosure have been described in detail above, the scope of the present disclosure is not limited thereto and it will be obvious to those skilled in the art that various modifications and variations may be made without departing from the scope of the present disclosure described in the claims. Some components of the aforementioned embodiments may be deleted and each embodiment may be implemented in combination with each other.

In the battery cell according to an embodiment of the present disclosure, the volume thereof may be reduced by the thickness of the cap plate.

In the battery cell according to an embodiment of the present disclosure, the welding bead may not protrude outside the case.

The description is merely an example of applying the principles of the present disclosure, and other components may be included without departing from the scope of the present disclosure.

Only specific examples of implementations of certain embodiments are described. Variations, improvements and enhancements of the disclosed embodiments and other embodiments may be made based on the disclosure of this patent document.

## Claims

1. A battery cell comprising:
a case accommodating an electrode assembly in an internal accommodation space and having an opening formed therein;
a cap plate at least partially inserted into the accommodation space through the opening; and
a support portion disposed in the accommodation space and supporting a lower surface of the cap plate,
wherein a side surface of the cap plate facing the internal surface of the case is spaced apart from the internal surface of the case by a predetermined distance to form a fixing space, and the support portion is disposed below the cap plate so that at least a portion thereof forms a lower surface of the fixing space.

2. The battery cell of claim 1, further comprising:
a welded portion at least partially disposed in the fixing space to fix the case to the cap plate,
wherein the support portion supports the welded portion and the cap plate together.

3. The battery cell of claim 1 or 2, wherein the support portion is coupled to the internal surface of the case, and at least one of the support portion is provided on the internal surface of the case to support an edge of the cap plate.

4. The battery cell of any one of preceding claims, wherein the internal surface of the case is provided as four or more surfaces, and the support portion is provided on two or four surfaces facing each other among the internal surfaces of the case to support the cap plate.

5. The battery cell of any one of preceding claims, wherein the support portion extends along the internal surface of the case and surrounds the opening of the case.

6. The battery cell of any one of preceding claims, wherein a chamfer inclined with a length increasing toward the accommodation space is formed on the side surface of the cap plate.

7. The battery cell of any one of preceding claims, wherein the side surface of the cap plate is provided with a step portion.

8. The battery cell of claim 7, wherein
the side surface of the cap plate includes:
a first side surface spaced apart from the internal surface of the case;
a second side surface disposed above the first side surface and having a smaller length than the first side surface; and
a step portion surface connecting the first side surface to the second side surface,
wherein at least one of the first side surface or the second side surface of the cap plate is formed with a chamfer inclined with a length increasing toward the accommodation space.

9. The battery cell of any one of claims 2 to 8, wherein an upper portion of the welded portion is disposed on the same level as or lower than an upper surface of the case.

10. The battery cell of any one of claims 2 to 9, wherein an upper surface of the case is disposed on the same level as or higher than an upper surface of the cap plate, and an upper portion of the welded portion is disposed on the same level as or higher than the upper surface of the cap plate.

11. The battery cell of claim 10, wherein the upper portion of the welded portion is disposed between the upper surface of the case and the upper surface of the cap plate.

12. The battery cell of any one of claims 2 to 11, wherein the fixing space is formed by the internal surface of the case, the side surface of the cap plate, and an upper surface of the support portion.

13. The battery cell of any one of claims 2 to 12, wherein a distance between an upper surface of the support portion and an upper surface of the case is equal to or greater than a height of the welded portion.

14. The battery cell of any one of preceding claims, wherein a length of the cap plate is formed to be smaller than a length of the internal surface of the case.

15. The battery cell of claim 1, further comprising a welded portion disposed between and fixing an internal surface of the case and a side surface of the cap plate facing the internal surface of the case to each other,
wherein at least a portion of the support portion is in contact with a lower surface of the welded portion.
